# EUROPÄISCHE PATENTSCHRIFT

(11) **EP 3 803 313 B1**
(45) Veröffentlichungstag und Bekanntmachung des Hinweises auf die Patenterteilung: **15.04.2026**
(21) Anmeldenummer: 19727001.0
(22) Anmeldetag: 27.05.2019
(51) Int. Cl.: G01M 5/00, F03D 17/00, B64F 5/60

(54) **LASTRAHMEN, PRÜFSTANDSYSTEM UND VERFAHREN ZUR VERWENDUNG DES LASTRAHMENS**
LOAD FRAME, TEST STAND SYSTEM AND METHOD FOR USING THE LOAD FRAME
CADRE PORTE-CHARGE, SYSTÈME DE BANC D'ESSAI ET PROCÉDÉ D'UTILISATION DU CADRE PORTE-CHARGE

(30) Priorität: 29.05.2018 DE 102018208463
(43) Veröffentlichungstag der Anmeldung: 14.04.2021
(73) Patentinhaber: Fraunhofer-Gesellschaft zur Förderung der angewandten Forschung e.V., 80686 München (DE)
(72) Erfinder: ROSEMEIER, Malo, 27572 Bremerhaven (DE); ANTONIOU, Alexandros, 27572 Bremerhaven (DE); LESTER, Catherine, 27572 Bremerhaven (DE); BÄTGE, Moritz, 27572 Bremerhaven (DE)
(74) Vertreter: Pfenning, Meinig & Partner mbB
(86) Internationale Anmeldenummer: PCT/EP2019/063679
(87) Internationale Veröffentlichungsnummer: WO 2019/228999

(56) Entgegenhaltungen:
- EP-A1- 2 741 068
- DE-A1- 3 840 261
- DE-T5- 112010 002 599
- DE-U1- 202011 001 901

## Beschreibung

Die Erfindung betrifft einen Lastrahmen für einen Prüfkörper, insbesondere für Windenergieanlagensubkomponenten, zur Verwendung in einem Prüfstand. Weiterhin bezieht sich die Erfindung auf ein System mit einem solchen Lastrahmen und ein Verfahren zu seiner Verwendung.

Die Rotorblätter von Windenergieanlagen sind im Betrieb starken Belastungen sowie Verschleiß ausgesetzt. Die Leistungsoptimierung bei größtmöglicher Sicherheit stellt beim Bau von Windenergieanlagen und insbesondere beim Entwickeln der Rotorblätter eine große Herausforderung dar. Hierfür sollten die elastischen Eigenschaften, wie Elastizitätsmodul, Streckgrenze, Festigkeit, Bruchdehnung, also die Belastbarkeit sowie die plastische und elastische Verformbarkeit, und weitere Strukturkennwerte des Rotorblatts bekannt sein.

Aufgrund der Länge der Rotorblätter, die häufig über 30 m beträgt, lassen sich diese häufig nicht als ganzes vermessen. Stattdessen werden Subkomponenten von Windenergieanlagen, also Komponenten der Windenergieanlagenrotorblätter, in einen Prüfstand eingespannt und auf Zug oder Druck belastet. Bei den Subkomponenten handelt es sich beispielsweise um Abschnitte oder Teilstrukturen von Rotorblättern mit Abmessungen von einigen Metern, die an unterschiedlichen Stellen des Rotorblatts entnommen werden. Daraus können Rückschlüsse auf das Verhalten des gesamten Rotorblatts gezogen werden. Um für die Subkomponente Bedingungen simulieren zu können, die den Bedingungen entsprechen, die dann bestehen, wenn die Subkomponente in dem Rotorblatt angeordnet ist und letzteres unter Belastung steht, ist eine gezielte und präzise Krafteinleitung nötig. Um eine derartige Belastung der Subkomponente zu erreichen, erfolgt die Krafteinleitung einer Prüfkraft zum Beispiel an einander gegenüberliegenden Enden der Subkomponente entlang zuvor berechneter Wirklinien. Die Prüfkörper sollten also in dem Prüfstand derart fixierbar sein, dass eine flexible Krafteinleitung an den Enden ermöglicht wird, bei der die Kraft beispielsweise entlang von Wirklinien, die nicht senkrecht zu einer Außenfläche des Prüfkörpers verlaufen und/oder exzentrisch, also mit einem Hebelarm zum elastischen Zentrum des Prüfkörpers eingeleitet wird. Eine derartige Krafteinleitung hat in manchen Fällen eine Verformung oder Verdrehung des Prüfkörpers aufgrund von eingeleiteten Biegemomenten zur Folge, die von dem Lastrahmen toleriert werden sollte.

Dokument DE 11 2010 002599 T5 zeigt einen Schutzschild für eine Backe eines sich hin- und herbewegenden Spannzeugs, aufweisend: einen oberen Schutzschildteil zum Positionieren über der Backe; einen unteren Schutzschildteil zum Positionieren unter der Backe; einen Verbindungselementteil zum Verbinden des oberen Schildteils mit dem unteren Schildteil; und einen Befestigungsteil zum Befestigen des Schutzschildes an der Backe.

DE 38 40 261 A1 zeigt eine Belastungsvorrichtung zum Beanspruchen einer Probe auf Zug oder Druck, bei der die Last durch Blattfedern aufgebracht wird, die zwischen einem unteren Joch und einem oberen Joch eingespannt sind und auf Knickung beansprucht werden.

EP 2 741 068 A1 zeigt einen Prüfstand für ein Rotorblatt mit einer Tragstruktur, an der ein axiales Ende des Rotorblattes befestigbar ist, und wenigstens einem Anregungsaggregat, das zur Anregung einer Schwingung des Rotorblatts mit dem Rotorblatt verbindbar ist. Es sind Federelemente vorgesehen, die jeweils an einer Anlenkstelle befestigt und mit dem Rotorblatt für den Prüfbetrieb verbindbar sind derart, dass das Rotorblatt zur Beeinflussung des Schwingungsverhaltens durch die Federelemente mit Federkräften beaufschlagbar ist, deren Kraftrichtung wenigstens eine Komponente aufweist, die parallel zu einer Hauptbelastungsrichtung des Rotorblatts verläuft.

DE 20 2011 001901 U1 zeigt eine Vorrichtung zur Schwingungsanregung von Rotorblättern mit einem am Rotorblatt befestigbaren Halter, wobei der Halter mindestens einen elektrodynamischen Massenaktor aufweist, der von einer Steuereinrichtung angesteuert ist.

Aufgabe der vorliegenden Erfindung ist es, einen Lastrahmen vorzuschlagen, der ein sicheres Einspannen von Prüfkörpern erlaubt und gleichzeitig ein Prüfen eines möglichst großen Prüfkörperabschnitts erlaubt. Dabei sollte der Prüfkörper auch bei im Prüfverfahren auftretenden Biegemomenten oder Schälbeanspruchungen über die komplette Dauer eines Prüfverfahrens möglichst gut fixiert sein.

Dies wird durch einen Lastrahmen mit den Merkmalen des unabhängigen Anspruchs 1 bzw. durch ein Prüfstandsystem gemäß Anspruch 11 oder ein Verfahren gemäß Anspruch 13 erreicht. Vorteilhafte Weiterbildungen ergeben sich aus den abhängigen Ansprüchen sowie aus der Beschreibung und den Figuren.

Der vorgeschlagene Lastrahmen umfasst eine Sandwichstruktur mit einer durchgehenden Ausnehmung. Die Ausnehmung erstreckt sich von einer Oberseite bis zu einer der Oberseite gegenüberliegenden Unterseite der Sandwichstruktur und an einer Umwandung der Ausnehmung liegt ein Blech an. Die Ausnehmung ist zum Aufnehmen eines Prüfkörpers ausgebildet. Zum Beispiel ist ein Abschnitt des Prüfkörpers, etwa ein Endbereich, in die Ausnehmung einführbar. Dabei kann die Ausnehmung so an eine Kontur des Prüfkörpers angepasst sein, dass dieser mit dem in der Ausnehmung angeordneten Stahlblech verklebbar ist.

Durch das an der Umwandung angeordnete Blech mit welchem der Prüfkörper verklebt werden kann, wird eine deutlich bessere Klebeverbindung zwischen dem Lastrahmen und den Prüfkörper erreicht als bei Lastrahmen, bei denen der Prüfkörper direkt mit der Sandwichstruktur verklebt wird. Durch den vorgeschlagenen Lastrahmen wird also eine besonders sichere und zuverlässige Fixierung erreicht. Weiterhin wird die Umwandung der Ausnehmung durch das Blech vor Rissen oder anderen durch Schälbeanspruchung verursachten Schäden geschützt. Es hat sich gezeigt, dass die Verwendung eines Blechs gute verstärkende Eigenschaften bei geringem Gewicht mit sich bringt, während gleichzeitig möglicherweise gewünschte elastische Eigenschaften der Sandwichstruktur zumindest teilweise erhalten bleiben.

Die Sandwichstruktur kann gestapelte Platten umfassen oder schichtartig hergestellt sein, zum Beispiel in einem generativen Verfahren. Sie weist dabei zum Beispiel in unterschiedlichen Schichten unterschiedliche Eigenschaften auf, beispielsweise Biegeeigenschaften, die an eine vorgesehene Beanspruchung angepasst werden können. Bei einer Stapelung von Platten oder einer schichtartigen Herstellung ist eine Schichtrichtung definiert, die sich von der Unterseite zur Oberseite erstreckt, in die Richtung, in der sich auch die durchgehende Ausnehmung erstreckt.

Durch Biegemomente, die beim Prüfen von Prüfkörpern eingeleitet werden, kann es an einer Klebenaht zwischen Platten der Sandwichstruktur oder an der Klebenaht zwischen Lastrahmen und Prüfkörper zu einer Schälbeanspruchung kommen. Insbesondere Sandwichstrukturen mit einer quer zur Klebenaht orientierten Faserung versagen bei einer derartigen Beanspruchung und wirken als Initiatoren für Risse in dem Lastrahmen. Dadurch reduziert sich die zur Kraftübertragung wirksame Fläche. Dem wird mit dem hier vorgeschlagenen Lastrahmen entgegengewirkt. Durch das Vermeiden von Rissen wird die während des Prüfverfahrens zur Verfügung stehende schubübertragenden Fläche geschützt. Es kann dann auf zusätzliche Befestigungsmittel, wie etwa den Lastrahmen und Prüfkörper verbindende Bolzen, verzichtet werden, die das Verhalten des Prüfkörpers beeinflussen könnten und hohem Verschleiß ausgesetzt sind.

Das Blech kann bei dem vorgeschlagenen Lastrahmen mit der Oberseite und/oder der Unterseite der Sandwichstruktur an einer oberen und/oder einer unteren Austrittsöffnung der Ausnehmung, mit der Sandwichstruktur bündig abschließen. Der Lastrahmen kann eine an der Oberseite der Sandwichstruktur angeordnete erste Metallplatte und/oder eine an der Unterseite der Sandwichstruktur angeordnete zweite Metallplatte umfassen, die jeweils derart über die jeweilige Austrittsöffnung der Ausnehmung an der sie angeordnet sind, ragen, dass das Blech an die erste und die zweite Metallplatte stößt und zwischen der ersten und der zweiten Metallplatte eingeklemmt wird. Dabei ist zum Beispiel zumindest eine der Metallplatten so angeordnet, dass die Ausnehmung zugängig bleibt. Eine der Metallplatten kann auch über die Austrittsöffnung, an der sie angeordnet ist ragen, und diese teilweise oder ganz verschließen. Der Prüfkörper wird dann zum Beispiel so eingeführt und mit dem Lastrahmen verbunden, dass er keinen Kontakt zu der die Austrittsöffnung verschließenden Metallplatte hat, sondern ein Abstand zwischen Prüfkörper und Metallplatte gewährleistet ist. So wird die Kraft auf den Prüfkörper weiterhin über die Verklebung bewirkt und es wird vermieden, dass die Metallplatte auf den Prüfkörper drückt.

Zumindest eine der Metallplatten, in manchen Ausführungen beide Metallplatten, können die jeweilige Austrittsöffnung, an der sie angeordnet sind umlaufen, weisen dann also jeweils eine Durchgangsöffnung auf. Dabei kann die Kontur oder Form der Durchgangsöffnung mit der Kontur der Ausnehmung korrespondieren. Ein Abschnitt des Prüfkörpers ist dann durch die jeweilige Durchgangsöffnung hindurch in die Ausnehmung einführbar.

Das Blech kann zum Beispiel ausschließlich von den beiden Metallplatten, zwischen denen es eingeklemmt ist, gehalten werden und muss nicht zusätzlich mit dem Lastrahmen verklebt werden. Dabei ist es bei einem derart fixierten Blech auch möglich, dass nach erfolgter Prüfung des Prüfkörpers durch Abnehmen einer oder beider der Metallplatten das Blech freigegeben wird, so dass es zusammen mit dem Prüfkörper aus der Ausnehmung entnommen werden kann. Die Sandwichstruktur kann dann wiederverwendet werden.

Das Blech ist zum Beispiel aus Metall, etwa aus Stahl gefertigt.

In möglichen Ausführungen kleidet das Blech die Umwandung der Ausnehmung vollständig aus. Dadurch kann eine maximal große Klebefläche bereitgestellt werden.

Die Durchgangsöffnungen der ersten und/oder der zweiten Metallplatte sind zum Beispiel derart ausgestaltet, dass eine Umwandung der jeweiligen Durchgangsöffnung bündig mit der Innenfläche des Blechs abschließt, d.h., so dass die Innenfläche sich ohne eine Stufe durch die jeweilige Durchgangsöffnung fortsetzt und ein maximaler Überlapp zwischen der jeweiligen Metallplatte und einer Ober- bzw. Unterkante des Blechs zur Fixierung des Blechs erreicht wird, ohne dass die jeweilige Metallplatte über das Blech übersteht und ein Einschieben des Prüfkörpers oder Einbringen von Klebstoff erschweren oder behindern würde. Die erste und/oder die zweite Metallplatte kann aber auch über die Innenfläche des Blechs überstehen.

Die Sandwichstruktur ist, wie erwähnt, zum Beispiel eine Struktur, die aus Lagen oder Schichten gebildet wird, wobei die Schichten unterschiedliche Eigenschaften haben können, zum Beispiel unterschiedliche elastische Eigenschaften, etwa ein unterschiedliches Biege- oder Kompressionsverhalten. Die Lagen oder Schichten in Richtung von der Oberseite zur Unterseite geschichtet oder gestapelt, so dass sich die Ausnehmung durch die Lagen oder Schichten erstreckt. Beispielsweise kann die Sandwichstruktur aus gestapelten Platten gebildet sein. Dabei kann es sich zumindest teilweise um Platten mit einer bevorzugten Biegerichtung handeln. Hierfür können die Platten beispielsweise Versteifungsstrukturen, die in eine Versteifungsrichtung ausgerichtet sind, enthalten. Die gestapelten Platten werden zum Beispiel miteinander verklebt.

Eine Wandstärke des Rahmens kann beispielsweise zwischen 5 cm und 30 cm, oder bevorzugt zwischen 10 cm und 20 cm, betragen.

Die Platten der Sandwichstruktur können als Schichtholzplatten ausgebildet sein. Schichtholzplatten können eine bevorzugte Biegerichtung aufweisen, die durch eine Faserorientierung bestimmt ist. Schichtholzplatten zeichnen sich durch ein niedriges Gewicht und niedrige Kosten aus und sind außerdem verhältnismäßig leicht zu bearbeiten, so dass beispielsweise die Ausnehmung gut eingebracht werden kann. Der vorgestellte Lastrahmen ermöglicht auch bei Verwendung einfacher Materialen wie Schichtholzplatten für die Sandwichstruktur ein sicheres Einspannen eines Prüfkörpers.

Die Platten der Sandwichstruktur können aber in manchen Ausführungen auch als mit Verstärkungen infundierte Platten ausgebildet sein. Durch die Verstärkungen können solche Platten ebenfalls eine Versteifungsrichtung und eine dadurch bestimmte bevorzugte Biegerichtung aufweisen. Beispielsweise können mit Epoxidharz und/oder Polyesterharz infundierte Platten, beispielsweise aufgeschäumte Platten zum Einsatz kommen. Beispielsweise kommen PU-Platten, PVC-Platten, PET-Platten oder Balsaholzplatten zum Einsatz. Die Platten können auch Rippen enthalten und/oder aus geschlitztem Schaum gebildet sein und/oder gitterstrukturartig angeordnete Fasern enthalten. Kombinationen verschiedenartiger Platten sind dabei ebenfalls möglich.

Durch das vorgeschlagene Stahlblech kann die Klebeverbindung um das 3 bis 4-fache fester sein als eine Klebeverbindung bei der der Prüfkörper mit beispielsweise den Holzplatten oder PU-Platten der Sandwichstruktur des Lastrahmens verklebt wird. Vorteilhafte Eigenschaften der Holzplatten oder PU-Platten wie deren Biegeverhalten und geringes Gewicht bleiben dabei zumindest größtenteils erhalten.

Die Lagen, also beispielsweise die Platten der Sandwichstruktur können so orientiert sein, dass eine bevorzugte Biegerichtung zumindest eine der Lagen oder eine der Platten von einer bevorzugten Biegerichtung zumindest einer weiteren der Lagen oder Platten abweicht. So können die bevorzugten Biegerichtungen der verschiedenen Platten oder Schichten zueinander um einen Winkel verdreht sein.

Beispielsweise können die Lagen oder Platten von Schicht zu Schicht alternierende bevorzugte Biegerichtungen aufweisen, etwa um 90° oder um einen anderen Winkel zueinander gedreht. Es ist zum Beispiel auch möglich, dass jede dritte oder jede vierte Lage oder Platte eine zu den übrigen Lagen oder Platten gedrehte bevorzugte Biegerichtung aufweist. Weitere Stapelschemata sind auch nicht ausgeschlossen.

Eine sich von der Oberseite zur Unterseite der Sandwichstruktur erstreckende Dicke der Sandwichstruktur, also beispielsweise im Falle eines Plattenstapels in Stapelrichtung, kann beispielsweise mindestens 20 cm und/oder höchstens 50 cm, vorzugsweise mindestens 25 cm und/oder höchstens 40 cm betragen. Durch das Blech werden besonders stabile und belastbare Lastrahmen auch bei geringer Dicke erreicht. Beispielsweise kann eine Dicke eines Lastrahmens, der zum Aufnehmen eines Endbereichs einer Windenergieanlagensubkomponente mit einer Länge von 3 m geeignet ist, 30 cm betragen. Durch erreichbare geringe Dicke des Lastrahmens kann ein möglichst langer Abschnitt des Prüfkörpers geprüft werden.

Dass Blech kann beispielsweise eine Dicke von mindestens 1 mm und/oder höchstens 3 mm aufweisen. Ein derartiges Blech lässt sich gut formen und an die Umwandung der Ausnehmung anpassen und weist gleichzeitig ein verhältnismäßig geringes Gewicht auf.

Wie erwähnt, kann die Ausnehmung an die Kontur des Endbereichs des Prüfkörpers angepasst werden, damit der Endbereich in die Ausnehmung einführbar ist. Zwischen dem an der Umwandung der Ausnehmung angeordneten Blech und der Kontur des Prüfkörpers ist in manchen Ausführungen ein den Prüfkörper umlaufender Spalt gegeben, der zum Beispiel eine Breite von zwischen 0,2 mm und 5 mm aufweisen kann, so dass ein Klebstoff in den Spalt eingebracht werden kann. Die Ausnehmung in der Sandwichstruktur weist dementsprechend gegenüber der Kontur des Endbereichs des Prüfkörpers eine Toleranz auf, die der Summe der Dicke des Blechs und der Breite des Spalts zum Einbringen des Klebstoffs entspricht.

Die erste und/oder die zweite Metallplatte ist in einigen Ausführungen mit der Sandwichstruktur verschraubt. Das heißt, es werden Schrauben durch die jeweilige Metallplatte und in die Ober- und/oder Unterseite der Sandwichstruktur eingebracht. Beispielsweise können Holzschrauben zum Einsatz kommen, etwa, wenn es sich bei der Sandwichstruktur um einen Stapel aus Holzplatten handelt. Alternativ oder zusätzlich können die erste und/oder die zweite Metallplatte mit dem Blech verbunden, beispielsweise verschweißt werden.

Eine Dicke der ersten und/oder der zweiten Metallplatte kann beispielsweise mindestens 0,2 cm und/oder höchstens 3 cm betragen, bevorzugt mindestens 0,5 cm und/oder höchstens 2 cm.

Ein Prüfstandsystem zum Prüfen von beispielsweise Windenergieanlagensubkomponenten, in dem der oben beschrieben Lastrahmen zum Einsatz kommen kann, umfasst zum Beispiel zwei Lastrahmen, deren jeweilige Ausnehmungen an Konturen gegenüberliegender Endbereiche des Prüfkörpers angepasst sind. Die Lastrahmen sind jeweils mit lasteinleitenden Strukturen des Prüfstandsystems verbunden, die relativ zueinander zum Einleiten von Kräften bewegbar sind.

Dabei können die Lastrahmen jeweils mit den Lasteinleitenden Strukturen verschraubt sein. Die Verschraubung kann beispielsweise derart erfolgen, dass Schrauben sich in Schichtrichtung durch die Sandwichstruktur erstrecken. Die Verschraubung kann auch durch die erste und/oder die zweite Metallplatte verlaufen und zusätzlich oder alternativ zu den erwähnten Schrauben oder Holzschrauben zur Fixierung der Metallplatten dienen. Die Verschraubung kann aber auch außerhalb der Metallplatten verlaufen und sich nur durch die Sandwichstruktur erstrecken. Im letzteren Fall können für die Verschraubung auch noch zusätzliche Unterlegplatten aus Metall zur Verfügung gestellt werden.

Zwischen den Lastrahmen und den lasteinleitenden Strukturen können Distanzringe angeordnet werden. Die Distanzringe können aus Metall, beispielsweise aus Stahl sein.

Das Prüfstandsystem kann so ausgebildet sein, dass ein Abstand zwischen den Lastrahmen beispielsweise zwischen 1 m und 12 m oder zwischen 1 m und 6 m beträgt, um Prüfkörper mit Längen von etwa zwischen 1 m und 12 m oder zwischen 1 m und 6 m aufnehmen und prüfen zu können. Der Abstand zwischen den Lastrahmen kann dann zur Prüfung reduziert oder vergrößert werden, um den Prüfkörper auf Druck oder Zug zu belasten. Je nach Anordnung der lasteinleitenden Strukturen relativ zu den Lastrahmen und je nach relativer Bewegungsrichtung der Lastrahmen zueinander können Kräfte und Biegemomente in den Prüfkörper eingeleitet werden.

Die Anmeldung bezieht sich weiterhin auf ein Verfahren zur Verwendung des vorgestellten Lastrahmens.

Bei einem derartigen Verfahren wird ein Abschnitt des Prüfkörpers in die Ausnehmung des Lastrahmens eingeführt und mit dem Stahlblech verklebt. Zum Beispiel wird ein Endbereich des Prüfkörpers in die Ausnehmung eingeführt, beispielsweise so, dass der Prüfkörper auf einer Seite bündig oder im Wesentlichen bündig mit dem Lastrahmen abschließt, um eine maximale Klebefläche zu erhalten und eine Länge des zwischen den Lastrahmen befindlichen zu prüfenden Bereichs des Prüfkörpers so lang wie möglich zu halten.

In hier vorgestellten Verfahren kann zwischen dem in der Ausnehmung angeordneten Blech und dem eingeführten Prüfkörper ein den Prüfkörper umlaufender Spalt mit einer Breite von zwischen 0,2 mm und 5 mm zum Einbringen von Klebstoff bereitgestellt werden. Zum Beispiel wird der Lastrahmen an den Prüfkörper angepasst, indem die Ausnehmung an Abmessungen des Prüfkörpers angepasst in die Sandwichstruktur eingeschnitten wird, oder indem die Sandwichstruktur oder die Platten der Sandwichstruktur mit einer entsprechenden Ausnehmung gefertigt werden.

Zum Prüfen des Prüfkörpers kann ein erster Endbereich des Prüfkörpers in den Lastrahmen eingeführt und verklebt werden und ein dem ersten Endbereich gegenüberliegender zweiter Endbereich in einen zweiten Lastrahmen eingeführt und mit dem zweiten Lastrahmen verklebt werden. Der zweite Lastrahmen kann die gleichen Merkmale aufweisen wie der oben vorgestellte. Die beiden Lastrahmen können dann zum Einleiten einer Zug- und/oder Druckbeanspruchung in den Prüfkörper relativ zueinander bewegt werden. Hierfür werden die Lastrahmen beispielsweise jeweils mit lasteinleitenden Strukturen verbunden.

Es sei betont, dass Merkmale, die nur im Zusammenhang mit dem Lastrahmen vorgestellt wurden auch für das Prüfstandsystem oder das Verfahren beansprucht werden können und anders herum. Ferner können auch Merkmale, die für das Verfahren gezeigt sind für das Prüfstandsystem beansprucht werden und anders herum.

Im Folgenden wird die Erfindung anhand von Figuren näher erläutert.

Es zeigen:
- Figur 1: einen Schnitt durch einen Lastrahmen mit einer lasteinleitenden Struktur und einem eingespannten Prüfkörper;
- Figur 2: einen vergrößerten Ausschnitt der Ansicht aus Figur 1, wobei eine Sandwichstruktur des Lastrahmens aus Schichtholzplatten gebildet ist;
- Figur 3: eine der Platten der Sandwichstruktur aus Figur 2;
- Figur 4: eine Schrägansicht eines Prüfstandsystems mit zwei Lastrahmen und einem eingespannten Prüfkörper;
- Figur 5: eine ähnliche Ansicht wie Figur 2, für eine alternative Ausführung des Lastrahmens, wobei die Sandwichstruktur aus infundierten PU-Platten gebildet ist;
- Figur 6: eine der Platten der Sandwichstruktur aus Figur 6; und
- Figur 7: eine Draufsicht auf eine Ausführung des Lastrahmens.

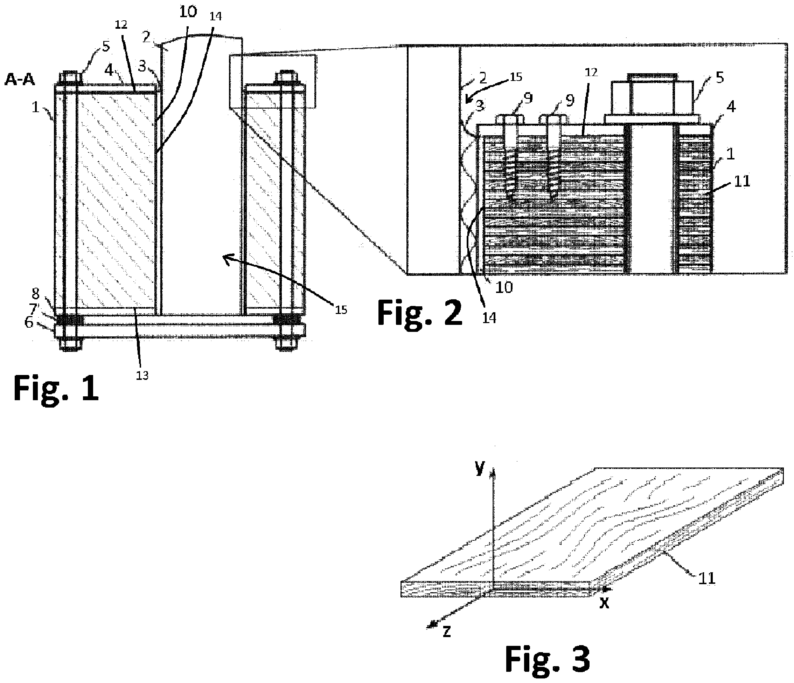

Figur 1 zeigt einen Schnitt A-A durch einen Lastrahmen mit einem Ausschnitt eines darin eingespannten Prüfkörpers 2 und Figur 2 einen vergrößerten Ausschnitt der Figur 1, wie durch einen Kasten angedeutet wird. Der Lastrahmen umfasst eine Sandwichstruktur 1, die eine durchgehende Ausnehmung 15 aufweist, die sich von einer Oberseite 12 bis zu einer der Oberseite 12 gegenüberliegenden Unterseite 13 der Sandwichstruktur 1 erstreckt. In der Ausnehmung 15 ist ein Abschnitt des Prüfkörpers 2, im vorliegenden Fall ein Endbereich des Prüfkörpers 2, eingeführt. An einer Umwandung 14 der Ausnehmung 15 liegt ein Blech 10 an.

Die Ausnehmung 15 ist formfolgend an eine vorbekannte Kontur des Endbereichs des Prüfkörpers 2 angepasst, so dass der Prüfkörper 2 unter Verwendung eines Klebstoffs 3, wie in den Figuren 1 und 2 gezeigt, in die Ausnehmung 15 eingeklebt werden kann.

Durch einen derartigen Lastrahmen wird eine deutlich bessere Klebeverbindung zwischen dem Lastrahmen und den Prüfkörper 2 erreicht als bei Lastrahmen, bei denen der Prüfkörper 2 direkt mit der Sandwichstruktur 1 verklebt wird. Durch den vorgeschlagenen Lastrahmen wird also eine besonders sichere und zuverlässige Fixierung erreicht. Weiterhin wird die Umwandung 14 der Ausnehmung 15 durch das Blech 10 vor Rissen oder anderen durch Schälbeanspruchung verursachten Schäden geschützt. Es hat sich gezeigt, dass die Verwendung des Blechs 10 gute verstärkende Eigenschaften bei geringem Gewicht mit sich bringt, während gleichzeitig möglicherweise gewünschte elastische Eigenschaften der Sandwichstruktur 1 zumindest teilweise erhalten bleiben. Somit werden Nachteile aus dem Stand der Technik bekannter Lastrahmen umgangen.

Die Sandwichstruktur 1 hat eine Schichtrichtung bzw. Stapelrichtung, die sich von der Unterseite 13 zur Oberseite 12 erstreckt.

Eine Dicke der Sandwichstruktur 1 beträgt zwischen 25 cm und 40 cm. In der Figur ist dabei nur ein unterer Teil des Prüfkörpers 2 dargestellt, der den Endbereich umfasst, der in den Lastrahmen eingeklebt ist und nur einige Zentimeter aus dem Rahmen herausragt.

In Figur 2 ist der durch den in der Figur 1 eingezeichneten Kasten gekennzeichnete Ausschnitt vergrößert dargestellt. In der Figur 2 ist zu erkennen ist, dass an einer Umwandung 14 der Ausnehmung 15 ein 1 bis 3 mm dickes Blech 10 anliegt, so dass der Endbereich des Prüfkörpers 2, der in der Ausnehmung 15 positioniert ist, mit einer Innenfläche des Blechs verklebt ist und nicht direkt mit der Sandwichstruktur. Das Blech 10 ist als Stahlblech ausgebildet, kann in anderen Ausführungen aber auch beispielsweise aus einem anderen Metall gefertigt sein.

Ferner zeigt Figur 2, dass die Sandwichstruktur aus in die Stapelrichtung gestapelten Platten 11, die als Schichtholzplatten ausgebildet sind, besteht, wie später noch näher erläutert wird. Die Sandwichstruktur 1 kann in anderen Ausführungen auch als schichtartig hergestellte Struktur, zum Beispiel als generativ gefertigte Struktur, oder als Stapel aus anders ausgestalteten Platten 11 ausgebildet sein. Die einzelnen Schichtholzplatten haben eine Dicke von zwischen 0.5 cm und 5 cm.

Das Blech 10 schließt mit der Oberseite 12 der Sandwichstruktur 1 bündig ab. Eine an der Oberseite 12 der Sandwichstruktur angeordnete, flach auf der Sandwichstruktur liegende erste Metallplatte 4, ragt über eine Austrittsöffnung der Ausnehmung 15 der Sandwichstruktur 1, so dass das Blech 10 an der ersten Metallplatte 4 anstößt und von ihr fixiert wird. Die Metallplatte schließt dabei bündig mit der Innenfläche des Blechs 10 ab. Eine oder beide der Metallplatten 4, 8 können aber auch über die Innenfläche ragen und zum Beispiel einige Millimeter über das Blech 10 überstehen.

An einer Unterseite 13 der Sandwichstruktur ist eine zweite Metallplatte 8 angeordnet, die gleichartig ausgestaltet ist wie die erste Metallplatte 4 und das Blech 10 von unten fixiert, so dass es zwischen der ersten Metallplatte 4 und der zweiten Metallplatte 8 eingeklemmt wird. Die erste und die zweite Metallplatte haben jeweils eine Dicke von zwischen 0,5 cm und 2 cm und sind mittels Holzschrauben 9 mit den als Schichtholzplatten ausgebildeten Platten 11 der Sandwichstruktur 1 verschraubt.

Die erste Metallplatte 4 und die zweite Metallplatte 8 fixieren das Blech 10 durch das beschriebene Einklemmen. Durch ein Abnehmen der ersten 4 und/oder der zweiten Metallplatte 8 das für die Prüfung mit dem Prüfkörper 2 verklebte Blech 10 wieder freigegeben und der Prüfkörper 2 entfernt werden. Es ist dann möglich, ein neues Blech 10 einzubringen und die übrigen Komponenten des Lastrahmens wiederzuverwenden, zum Beispiel wenn die Sandwichstruktur 1 intakt geblieben ist. In manchen Ausführungen können die erste 4 und/oder die zweite Metallplatte 8 aber auch zusätzlich mit dem Blech verbunden sein, zum Beispiel durch Verschweißen.

Die Ausnehmung 15 der Sandwichstruktur 1 ist derart an die Kontur des Endbereichs des Prüfkörpers 2 angepasst, dass zwischen dem an der Umwandung 14 der Ausnehmung 15 angeordneten Blech 10 und der Kontur des Prüfkörpers 2 ein den Prüfkörper 2 umlaufender Spalt mit einer Breite von zwischen 0,2 mm und 5 mm gegeben ist, so dass Klebstoff 3 in den Spalt eingebracht werden kann.

Das Blech kleidet dabei die Umwandung 14 der Ausnehmung 15 vollständig aus, so dass der Prüfkörper 2 umlaufend mit dem Blech 10 verklebt ist. Der Prüfkörper 2 ist nur mit dem Blech 10 verbunden, welches seinerseits durch die erste 4 und die zweite Metallplatte 8 fixiert wird.

Der Lastrahmen ist durch eine Verschraubung 5 mit einer lasteinleitenden Struktur 6 verbunden, wobei zwischen dem Lastrahmen und der lasteinleitenden Struktur Distanzringe 7 angeordnet sind. Die Distanzringe sind aus Stahl gefertigt. Die lasteinleitende Struktur befindet sich an der Unterseite 13 des Lastrahmens. Die Verschraubung 5 erstreckt sich durch die gesamte Sandwichstruktur 1 und die Metallplatten 4, 8. Der Prüfkörper 2 schließt im vorliegenden Beispiel an einem unteren Ende, an der Unterseite des Lastrahmens, mit der unteren Metallplatte 8 ab. In anderen Ausführungen kann der Prüfkörper 2 aber aufgrund der Distanzringe 7 an der Unterseite auch über den Lastrahmen überstehen. Er kann aber auch innerhalb des Lastrahmens enden. Dann kann die untere Metallplatte 8 auch als durchgehende Metallplatte ausgebildet sein und die Ausnehmung 15 unten verschließen.

Figur 3 zeigt in einer Schrägansicht eine der Schichtholzplatten der in Figur 2 erkennbaren Sandwichstruktur 1. Ein Faserverlauf der Schichtholzplatte verläuft im Wesentlichen parallel zu einer z-Achse und definiert damit eine bevorzugte Biegerichtung der Schichtholzplatte um eine Achse parallel zu einer x-Achse, wenn beispielsweise Enden der Platte 11 parallel zu einer y-Achse belastet werden. Werden mehrere derartige Platten 11 wie in der Figur 2 gezeigt übereinandergeschichtet, so können deren Faserorientierungen parallel zueinander verlaufen oder einen Winkel einschließen, indem eine oder mehrere der Platten um die y-Achse rotiert werden. Beispielsweise kann zumindest eine der Platten 11 der Sandwichstruktur 1 eine andere Faserorientierung aufweisen als die übrigen der Platten 11. Die Platten 11 können aber auch abwechselnd um 90° zueinander gedreht oder einem anderen Schema folgend angeordnet werden, wobei auch andere Winkel als 90° möglich sind. So kann erreicht werden, dass die Sandwichstruktur 1 als Ganzes auch entlang unterschiedlicher Achsen ein unterschiedliches Biegeverhalten aufweist. Beispielsweise kann auch jede dritte oder jede vierte Platte um 90° gedreht sein.

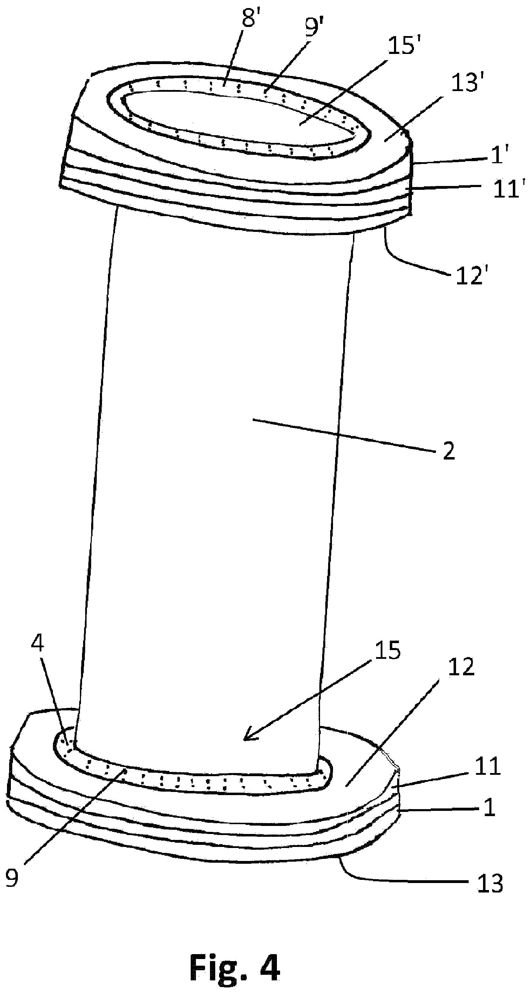

Figur 4 zeigt ein Prüfstandsystem, welches zwei Lastrahmen umfasst, zwischen denen der Prüfkörper 2 eingespannt ist. Beide Lastrahmen sind dabei Lastrahmen gemäß dieser Anmeldung und weisen die gleichen Merkmale auf. In der Figur sind zu einem zweiten der beiden Lastrahmen gehörenden Merkmale zur Unterscheidung mit gestrichenen Bezugszeichen gekennzeichnet, während für einen ersten der beiden Lastrahmen ungestrichene Bezugszeichen verwendet werden. Die gestrichenen Bezugszeichen dienen, wo nötig, der Unterscheidung. Da beide Lastrahmen die gleichen Eigenschaften haben, sei darauf hingewiesen, dass solche Merkmale, auf die nur mit ungestrichenen Bezugszeichen Bezug genommen wird, ebenfalls bei dem zweiten Lastrahmen vorhanden sein können und anders herum. Insbesondere weisen beide Lastrahmen Bleche 10 auf (nicht gezeigt, siehe Figuren 1 und 2), die an den Umwandungen der Ausnehmungen 15, 15' angeordnet sind.

Die beiden Lastrahmen sind gespiegelt zueinander angeordnet.

Der Prüfkörper 2 erstreckt sich zwischen den beiden Lastrahmen, ist mit seinen Endbereichen in die Lastrahmen eingeführt und tritt an den Oberseiten 12, 12' aus den Lastrahmen hervor, wobei der Begriff Oberseite hier so definiert ist, dass es sich um diejenige Seite handelt, an der der zu prüfende Abschnitt des Prüfkörpers 2 aus dem Lastrahmen hervortritt.

Jeder Lastrahmen ist zwischen 25 cm und 50 cm dick. Der Prüfkörper 2 weist als Windenergieanlagensubkomponente eine Länge von zwischen 1 m und 12 m auf.

An der Oberseite 12 der Sandwichstruktur 1 des ersten Lastrahmens ist die erste Metallplatte 4 mit einer Durchgangsöffnung angeordnet, die mittels Holzschrauben 9 mit den Platten 11 der Sandwichstruktur 1 verschraubt ist. Die Durchgangsöffnung der ersten Metallplatte 4 ist so ausgestaltet, dass die erste Metallplatte 4 die Ausnehmung 15 des ersten Lastrahmens formfolgend umläuft und das an der Umwandung 14 anliegende Blech fixiert. Aus der Ausnehmung 15 tritt an der Oberseite 12 des ersten Lastrahmens der mit dem ersten Endbereich in den ersten Lastrahmen eingeführte Prüfkörper 2 hervor, sich durch die Durchgangsöffnung der ersten Metallplatte 4 erstreckend.

Der zweite Endbereich des Prüfkörpers 2 ist von der Oberseite 12' des zweiten Lastrahmens her in dessen Ausnehmung 15' eingeführt. Die Unterseite 13' des zweiten Lastrahmens ist in der Figur 4 sichtbar. Dort ist eine Austrittsöffnung der Ausnehmung 15' zu sehen, an der die Ausnehmung an der Unterseite 13' der Sandwichstruktur 1' hervortritt, und die von der zweiten Metallplatte 8' umlaufen wird. Die zweite Metallplatte 8' fixiert das in dem zweiten Lastrahmen ebenfalls vorhandene Blech 10'. In anderen Ausführungen kann die zweite Metallplatte 8 die Austrittsöffnung an der Unterseite 13' auch verdecken oder teilweise verdecken. Der Prüfkörper 2 schließt im Wesentlichen bündig mit der Unterseite 13' der Sandwichstruktur 1' ab und ragt nicht in den Bereich der zweiten Metallplatte 8'. Der Prüfkörper kann auch innerhalb des Prüfkörpers enden, zum Beispiel in Ausführungen, in denen die zweite Metallplatte 8' die Austrittsöffnung der Ausnehmung 15' ganz oder teilweise verdeckt.

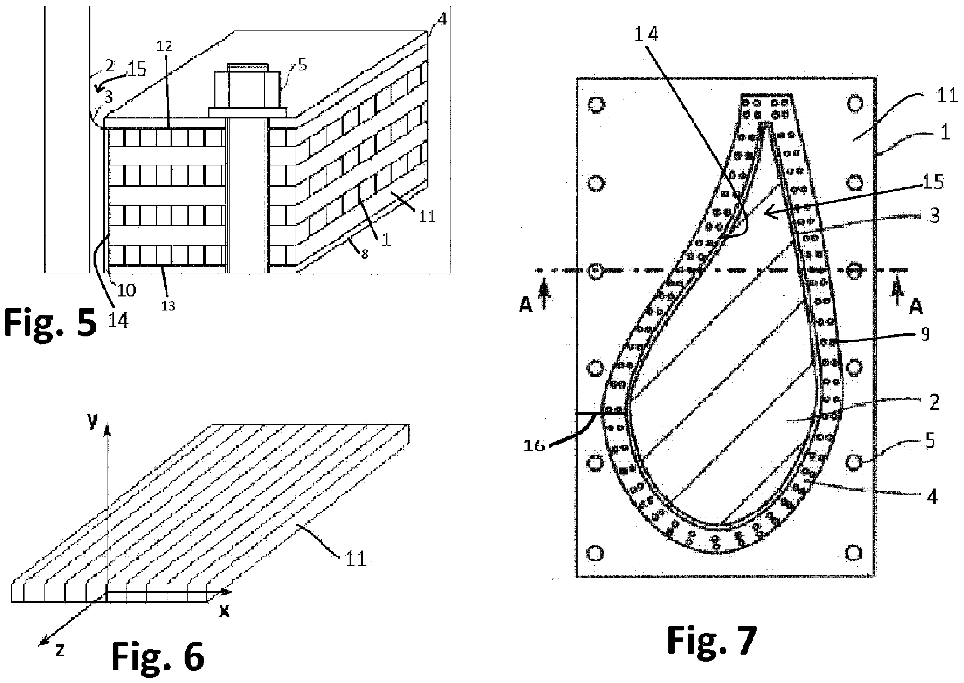

Die beiden Lastrahmen sind mit lasteinleitenden Strukturen 6 verbindbar, die an den Unterseiten 13, 13' der Lastrahmen angeordnet werden können (siehe Figuren 1 und 7). Mittels der lasteinleitenden Strukturen 6 sind die beiden Lastrahmen gegeneinander bewegbar, wodurch bei Verwendung der Lastrahmen zum Prüfen des Prüfkörpers 2 beispielsweise eine Zug- oder Druckbeanspruchung in den Prüfkörper 2 eingeleitet werden kann. Dadurch lassen sich elastische Eigenschaften des Prüfkörpers, wie zum Beispiel Elastizitätsmodul, Streckgrenze, Festigkeit, Bruchdehnung, also die Belastbarkeit sowie die plastische und elastische Verformbarkeit des Prüfkörpers 2 ermitteln.

Figur 5 zeigt einen ähnlichen Ausschnitt wie Figur 2 für eine alternative Ausführungsform des gezeigten Lastrahmens. Die Sandwichstruktur 1 ist dabei aus mit Verstärkungen infundierten Platten 11 gebildet. In Figur 6 ist eine derartige Platte 11 im Detail gezeigt. Es handelt sich um eine mit Harz, Epoxid oder Polyester infundierte PU-Platte, PVC-Platte oder Balsaholzplatte, die wie die oben beschriebene Schichtholzplatte eine bevorzugte Biegerichtung um eine Achse parallel zur x-Achse aufweist.

In der Sandwichstruktur in Figur 5 sind derartige mit Verstärkungen infundierte Platten 11 alternierend um 90° zueinander gedreht angeordnet.

Die Metallplatten 4, 8, die an der Oberseite 12 und an der Unterseite 13 der Sandwichstruktur 1 angeordnet sind, sind mittels der Verschraubung 5 mit der Sandwichstruktur verspannt. Hierfür ist die Verschraubung nah an der Ausnehmung 15, zum Beispiel mit einem Abstand von 1 cm bis 5 cm zur Ausnehmung 15 angeordnet, um ein Durchbiegen der Metallplatten 4, 8 unter Last zu vermeiden. Auf zusätzliche Schrauben zur Fixierung der Metallplatten 4, 8 wird in diesem Beispiel verzichtet. Das ist auch in Ausführungen mit Schichtholzplatten oder anders ausgestalteten Platten möglich.

Figur 7 zeigt eine Draufsicht auf eine Oberseite 12 eines ähnlichen Lastrahmens wie in den Figuren 1 und 4 gezeigt. Die Schnittlinie A-A der Figur 1 ist in Figur 7 entsprechend gekennzeichnet. In der Figur ist eine oberste der Platten 11 der Sandwichstruktur 1 zu sehen, in deren Aussparung der Prüfkörper 2 positioniert und mittels Klebstoff 3 fixiert ist.

Die erste Metallplatte 4, die zur Fixierung des Blechs 10 dient, umläuft die Austrittsöffnung der Aussparung und weist eine der Aussparung folgende Durchgangsöffnung auf. Die erste Metallplatte 4 bildet somit ein der Aussparung folgendes metallisches Band mit einer Breite von 3 bis 10 cm, welches mittels Holzschrauben 9 mit der Sandwichstruktur 1 verschraubt ist.

Die Durchgangsöffnung ist dabei so groß, dass ihre Umwandung 14 mit der Innenfläche des Blechs 10 bündig abschließt und sich somit die Ausnehmung 15 mit dem darin angeordneten Blech 10 stufenlos durch die Durchgangsöffnung fortsetzt, so dass ein maximaler Überlapp mit dem Blech 10 zu dessen Fixierung erreicht wird und der Endbereich des Prüfkörpers 2 durch die Durchgangsöffnung bei Verwendung des Lastrahmens in die Ausnehmung 15 einführbar ist.

Ein verbleibender Spalt zwischen dem Blech 10 und dem Prüfkörper 2, in den Klebstoff 3 eingebracht ist und der sich durch die Durchgangsöffnung zwischen Metallplatte 4 und Prüfkörper 2 fortsetzt, hat dann sowohl im Bereich des Blechs 10 als auch im Bereich der Metallplatte 4 eine Breite von zwischen 0,2 mm und 5 mm.

Eine Wandstärke 16 des Rahmens, die von der Umwandung 14 der Ausnehmung 15 bis zu einem äußeren Rand der Sandwichstruktur 1 gemessen wird, beträgt überall mindestens 10 cm.

Die Verschraubung 5, die zur Verbindung des Lastrahmens mit der lasteinleitenden Struktur 6 dient, ist außerhalb der Metallplatte direkt in die Sandwichstruktur 1 eingebracht, sie kann sich in anderen Ausführungen aber auch durch die Metallplatte erstrecken.

Durch den gezeigten Lastrahmen können insbesondere durch eine Position der lasteinleitenden Struktur 6 relativ zu dem Lastrahmen gezielt Bedingungen simuliert werden, die den Bedingungen entsprechen, die dann bestehen, wenn der Prüfkörper zum Beispiel als Teil eines Rotorblatts einer Windenergieanlage betrieben bzw. verwendet würde. Hierfür können beispielsweise durch exzentrische Krafteinleitung Biegemomente in den Prüfkörper 2 eingeleitet werden. Dafür kann die Verschraubung 5 entsprechend angeordnet werden bzw. die lasteinleitende Struktur mit entsprechend gewählten Schrauben der Verschraubung 5 verbunden werden. Wie erwähnt, ist der vorgestellte Lastrahmen besonders geeignet, mit Biegemomenten einhergehende Querbeanspruchungen oder Schälbeanspruchungen zu tolerieren und die Verklebung 3 oder die Sandwichstruktur 1 vor einem Versagen zu schützen.

An einer der in der Figur gezeigten Oberseite 12 abgewandten Unterseite 13 des Lastrahmens ist eine zweite Metallplatte 8 angeordnet, die die gleichen Eigenschaften wie die hier beschriebene erste Metallplatte 4 aufweisen kann. Die zweite Metallplatte 8 kann dann an die Austrittsöffnung an der Unterseite 13 des Lastrahmens angepasst sein, die sich in ihrer Form und/oder Größe von der in der Figur 7 gezeigten oberen Austrittsöffnung unterscheiden kann. Die zweite Metallplatte 8 kann in möglichen Ausführungen auch anders ausgebildet sein als die erste Metallplatte 4 und zum Beispiel die untere Austrittsöffnung zumindest teilweise verschließen.

### Bezugszeichenliste

- 1: Sandwichstruktur
- 2: Prüfkörper
- 3: Klebstoff
- 4: Erste Metallplatte
- 5: Verschraubung
- 6: Lasteinleitende Struktur
- 7: Distanzring
- 8: Zweite Metallplatte
- 9: Holzschraube
- 10: Blech
- 11: Platte
- 12: Oberseite
- 13: Unterseite
- 14: Umwandung
- 15: Ausnehmung
- 16: Wandstärke

## Patentansprüche

1. Lastrahmen zum Prüfen von Windenergieanlagensubkomponenten, zur Verwendung in einem Prüfstand, der eine Sandwichstruktur (1) mit einer durchgehenden Ausnehmung (15) zum Aufnehmen eines Prüfkorpers (2) umfasst, **dadurch gekennzeichnet, dass** sich die Ausnehmung (15) von einer Oberseite (12) bis zu einer der Oberseite (12) gegenüberliegenden Unterseite (13) der Sandwichstruktur (1) erstreckt und wobei der Lastrahmen ein Blech (10) umfasst, das an einer Umwandung (14) der Ausnehmung (15) anliegt, wobei die Sandwichstruktur gestapelte Platten umfasst oder schichtartig hergestellt ist.

2. Lastrahmen gemäß Anspruch 1, wobei das Blech (10) mit der Oberseite (12) und der Unterseite (13) der Sandwichstruktur bündig abschließt und der Lastrahmen weiterhin eine an der Oberseite (12) der Sandwichstruktur (1) angeordnete erste Metallplatte (4) und eine an der Unterseite (13) der Sandwichstruktur (1) angeordnete zweite Metallplatte (8) umfasst, wobei die erste (4) und die zweite Metallplatte (8) jeweils derart über Austrittsöffnungen der Ausnehmung (15) ragen dass das Blech (10) an die erste (4) und die zweite Metallplatte (8) stößt und zwischen der ersten (4) und der zweiten Metallplatte (8) eingeklemmt wird,
wobei die erste Metallplatte (4) und/oder die zweite Metallplatte (8) vorzugsweise eine Durchgangsöffnung aufweisen, so dass sich die Ausnehmung (15) durch die jeweilige Durchgangsöffnung fortsetzt.

3. Lastrahmen gemäß Anspruch 2, wobei eine Umwandung (14) der Durchgangsöffnung der ersten (4) und/oder der zweiten Metallplatte (8) bündig mit der Innenfläche des Blechs (10) abschließt.

4. Lastrahmen gemäß einem der vorhergehenden Ansprüche, wobei das Blech (10) die Umwandung (14) der Ausnehmung (15) vollständig auskleidet.

5. Lastrahmen gemäß einem der vorhergehenden Ansprüche, wobei das Blech (10) als Stahlblech ausgebildet ist.

6. Lastrahmen gemäß einem der vorhergehenden Ansprüche, wobei die Sandwichstruktur (1) aus gestapelten Platten (11) gebildet ist, vorzugsweise zumindest teilweise aus Platten (11) mit einer bevorzugten Biegerichtung.

7. Lastrahmen gemäß Anspruch 6, wobei die Platten (11) der Sandwichstruktur (1) als Schichtholzplatten ausgebildet sind oder
wobei die Platten (11) der Sandwichstruktur (1) als mit Verstärkungen infundierte Platten ausgebildet sind, vorzugsweise als mit Epoxidharz oder Polyesterharz infundierte aufgeschäumte PU-Platten, PVC-Platten, PET-Platten oder Balsaholzplatten.

8. Lastrahmen gemäß Anspruch 6 oder 7, wobei die Platten (11) der Sandwichstruktur (1) so orientiert sind, dass eine bevorzugte Biegerichtung zumindest einer der Platten (11) von einer bevorzugten Biegerichtung zumindest einer weiteren der Platten (11) verschieden ist wobei die Platten vorzugsweise alternierend mit um 90° zueinander gedrehten bevorzugten Biegerichtungen angeordnet sind.

9. Lastrahmen gemäß einem der vorhergehenden Ansprüche, wobei eine von der Oberseite (12) zur Unterseite (13) gemessene Dicke der Sandwichstruktur (1) mindestens 20 cm und/oder höchstens 50 cm, vorzugsweise mindestens 25 cm und/oder höchstens 40 cm beträgt und/oder
wobei eine Dicke des Blechs (10) mindestens 1 mm und/oder höchstens 3 mm beträgt.

10. Lastrahmen gemäß Anspruch 2 oder gemäß einem der Ansprüche 3 bis 9, sofern rückbezogen auf Anspruch 2, wobei die erste (4) und/oder die zweite Metallplatte (8) mit der Sandwichstruktur (1) verschraubt ist und/oder
wobei eine Dicke der ersten (4) und/oder der zweiten Metallplatte (8) mindestens 0,2 cm und/oder höchstens 3 cm beträgt, bevorzugt mindestens 0,5 cm und/oder höchstens 2 cm beträgt.

11. Prüfstandsystem, zwei Lastrahmen gemäß einem der vorhergehenden Ansprüche umfassend, wobei die Lastrahmen jeweils mit lasteinleitenden Strukturen (6) des Prüfstandsystems verbunden sind, die relativ zueinander bewegbar sind.

12. Prüfstandsystem gemäß Anspruch 11, wobei jeder der Lastrahmen jeweils mit einer lasteinleitenden Struktur (6) verschraubt ist und zwischen den Lastrahmen und der jeweiligen lasteinleitenden Struktur (6) mit der er verschraubt ist, jeweils Distanzringe (7) angeordnet sind und/oder
wobei ein Abstand zwischen den zwei Lastrahmen zwischen 1 m und 12 m beträgt, zum Prüfen von Prüfkörpern (2) mit Längen von im Wesentlichen zwischen 1 m und 12 m.

13. Verfahren zur Verwendung des Lastrahmens gemäß einem der Ansprüche 1 bis 10 zum Prüfen eines Prüfkörpers (2), **dadurch gekennzeichnet, dass** ein Abschnitt des Prüfkörpers (2) in die Ausnehmung (15) des Lastrahmens eingeführt und mit dem Blech (10) verklebt wird.

14. Verfahren gemäß Anspruch 13, wobei zwischen dem in der Ausnehmung (15) angeordneten Blech (10) und dem eingeführten Prüfkörper (2) ein den Prüfkörper (2) umlaufender Spalt mit einer Breite von zwischen 0,2 mm und 5 mm zum Einbringen von Klebstoff (3) bereitgestellt wird.

15. Verfahren gemäß Anspruch 13 oder 14, wobei ein erster Endbereich des Prüfkörpers (2) in den Lastrahmen eingeführt und verklebt wird und ein dem ersten Endbereich gegenüberliegender zweiter Endbereich in einen zweiten Lastrahmen eingeführt und mit dem zweiten Lastrahmen verklebt wird und die beiden Lastrahmen zum Einleiten einer Zug- und/oder Druckbeanspruchung in den Prüfkörper (2) relativ zueinander bewegt werden.

## Claims

1. A load frame for testing wind turbine subcomponents, to use in a test bench comprising a sandwich structure (1) with a continuous recess (15) for receiving a test specimen (2), **characterised in that** the recess (15) extends from an upper side (12) to a lower side (13) of the sandwich structure (1) opposite the upper side (12), and the load frame comprising a sheet (10) which rests against a wall (14) of the recess (15), the sandwich structure comprising stacked plates or being manufactured in layers.

2. The load frame according to claim 1, the sheet metal (10) being flush with the upper side (12) and the lower side (13) of the sandwich structure, and the load frame further comprising a first metal panel (4) arranged on the upper side (12) of the sandwich structure (1) and a second metal panel (8) arranged on the lower side (13) of the sandwich structure (1), the first (4) and second metal panels (8) each protruding beyond the outlet openings of the recess (15) such that the sheet metal (10) abuts against the first (4) and second metal panels (8) and is clamped between the first (4) and second metal panels (8),
the first metal panel (4) and/or the second metal panel (8) having preferably a through-opening, so that the recess (15) continues through the respective through-opening.

3. The load frame according to claim 2, a wall (14) of the through-opening of the first (4) and/or second metal panel (8) terminating flush with the inner surface of the sheet (10).

4. The load frame according to any one of the preceding claims, the sheet (10) completely lining the wall (14) of the recess (15).

5. The load frame according to any one of the preceding claims, the sheet (10) being formed as steel sheet.

6. The load frame according to any one of the preceding claims, the sandwich structure (1) being formed from stacked panels (11), preferably at least partially from panels (11) with a preferred bending direction.

7. The load frame according to claim 6, the panels (11) of the sandwich structure (1) being designed as laminated wood panels or
the panels (11) of the sandwich structure (1) being formed as panels infused with reinforcements, preferably as foamed PU panels, PVC panels, PET panels, or balsa wood panels infused with epoxy resin or polyester resin.

8. The load frame according to any of the claims 6 or 7, the panels (11) of the sandwich structure (1) are oriented such that a preferred bending direction of at least one of the panels (11) is different from a preferred bending direction of at least one further panel (11), the panels being preferably arranged alternately with preferred bending directions rotated by 90° relative to each other.

9. The load frame according to any one of the preceding claims, a thickness of the sandwich structure (1) measured from the upper side (12) to the lower side (13) is at least 20 cm and/or at most 50 cm, preferably at least 25 cm and/or at most 40 cm, and/or
a thickness of the sheet (10) being at least 1 mm and/or at most 3 mm.

10. The load frame according to claim 2 or according to any one of claims 3 to 9, insofar as it refers back to claim 2, the first (4) and/or the second metal plate (8) being screwed to the sandwich structure (1)
and/or
a thickness of the first (4) and/or second metal plate (8) being at least 0.2 cm and/or at most 3 cm, preferably at least 0.5 cm and/or at most 2 cm.

11. A test bench system comprising two load frames according to any one of the preceding claims, the load frames each being connected to load-introducing structures (6) of the test bench system, which are movable relative to each other.

12. The test bench system according to claim 11, each of the load frames being screwed to a load-introducing structure (6) and spacer rings (7) being arranged between the load frame and the respective load-introducing structure (6) to which it is screwed
and/or
a distance between the two load frames being between 1 m and 12 m, for testing test specimens (2) with lengths of essentially between 1 m and 12 m.

13. A method for using the load frame according to any one of claims 1 to 10 for testing a test specimen (2), **characterised in that** a section of the test specimen (2) is inserted into the recess (15) of the load frame and glued to the sheet (10).

14. The method according to claim 13, a gap with a width of between 0.2 mm and 5 mm being provided between the sheet (10) arranged in the recess (15) and the inserted test specimen (2) for the purpose of introducing adhesive (3).

15. The method according to claim 13 or 14, a first end region of the test specimen (2) is inserted into the load frame and glued in place, and a second end region opposite the first end region is inserted into a second load frame and glued to the second load frame, and the two load frames are moved relative to each other to induce a tensile and/or compressive stress in the test specimen (2).

## Revendications

1. Cadre de charge permettant de tester des sous-composants d'éoliennes, pour une utilisation dans un banc de test, comprenant une structure sandwich (1) avec un évidement traversant (15) permettant d'accueillir une éprouvette (2), **caractérisé en ce que** l'évidement (15) s'étend d'une face supérieure (12) jusqu'à une face inférieure (13), opposée à la face supérieure (12), de la structure sandwich (1), et dans lequel le cadre de charge comprend une tôle (10) appuyée contre une paroi (14) de l'évidement (15), dans lequel la structure sandwich comprend des plaques empilées ou est fabriquée de manière stratifiée.

2. Cadre de charge selon la revendication 1, dans lequel la tôle (10) est alignée avec la face supérieure (12) et la face inférieure (13) de la structure sandwich, et le cadre de charge comprend en outre une première plaque métallique (4) agencée sur la face supérieure (12) de la structure sandwich (1) et une seconde plaque métallique (8) agencée sur la face inférieure (13) de la structure sandwich (1), dans lequel la première plaque métallique (4) et la seconde plaque métallique (8) dépassent respectivement des orifices de sortie de l'évidement (15) de telle manière que la tôle (10) bute contre la première plaque métallique (4) et la seconde plaque métallique (8) et est coincée entre la première plaque métallique (4) et la seconde plaque métallique (8),
dans lequel la première plaque métallique (4) et/ou la seconde plaque métallique (8) présentent de manière préférée un orifice de passage, de sorte que l'évidement (15) se prolonge à travers l'orifice de passage respectif.

3. Cadre de charge selon la revendication 2, dans lequel une paroi (14) de l'orifice de passage de la première plaque métallique (4) et/ou de la seconde plaque métallique (8) est alignée avec la surface intérieure de la tôle (10).

4. Cadre de charge selon l'une quelconque des revendications précédentes, dans lequel la tôle (10) recouvre complètement la paroi (14) de l'évidement (15).

5. Cadre de charge selon l'une quelconque des revendications précédentes, dans lequel la tôle (10) est réalisée sous la forme d'une tôle d'acier.

6. Cadre de charge selon l'une quelconque des revendications précédentes, dans lequel la structure sandwich (1) est formée de plaques empilées (11), de manière préférée au moins partiellement de plaques (11) présentant une direction de flexion préférée.

7. Cadre de charge selon la revendication 6, dans lequel les plaques (11) de la structure sandwich (1) sont réalisées sous la forme de panneaux de bois stratifiés ou
dans lequel les plaques (11) de la structure sandwich (1) sont réalisées sous la forme de plaques imprégnées de renforts, de manière préférée sous la forme de plaques en PU, de plaques en PVC, de plaques en PET, expansées, ou de plaques en balsa, imprégnées de résine époxy ou de résine polyester.

8. Cadre de charge selon la revendication 6 ou 7, dans lequel les plaques (11) de la structure sandwich (1) sont orientées de sorte qu'une direction de flexion préférée d'au moins une des plaques (11) est différente d'une direction de flexion préférée d'au moins une autre plaque (11), dans lequel les plaques sont de manière préférée agencées en alternance avec des directions de flexion préférées tournées de 90° les unes par rapport aux autres.

9. Cadre de charge selon l'une quelconque des revendications précédentes, dans lequel l'épaisseur, mesurée depuis la face supérieure (12) jusqu'à la face inférieure (13), de la structure sandwich (1) est d'au moins 20 cm et/ou d'au plus 50 cm, de manière préférée d'au moins 25 cm et/ou d'au plus 40 cm et/ou
dans lequel l'épaisseur de la tôle (10) est d'au moins 1 mm et/ou d'au plus 3 mm.

10. Cadre de charge selon la revendication 2 ou selon l'une quelconque des revendications 3 à 9, dans la mesure où elle dépend de la revendication 2, dans lequel la première plaque métallique (4) et/ou la seconde plaque métallique (8) est/sont vissée(s) à la structure sandwich (1)
et/ou
dans lequel l'épaisseur de la première plaque métallique (4) et/ou de la seconde plaque métallique (8) est d'au moins 0,2 cm et/ou d'au plus 3 cm, de manière préférée d'au moins 0,5 cm et/ou d'au plus 2 cm.

11. Système de banc de test comprenant deux cadres de charge selon l'une quelconque des revendications précédentes, dans lequel les cadres de charge sont respectivement reliés à des structures d'introduction de charge (6) du système de banc de test qui peuvent être déplacées les unes par rapport aux autres.

12. Système de banc de test selon la revendication 11, dans lequel chacun des cadres de charge est respectivement vissé à une structure d'introduction de charge (6) et des anneaux d'espacement (7) sont respectivement agencés entre le cadre de charge et la structure d'introduction de charge (6) respective à laquelle il est vissé
et/ou
dans lequel la distance entre les deux cadres de charge est comprise entre 1 m et 12 m, afin de tester des éprouvettes (2) présentant des longueurs comprises essentiellement entre 1 m et 12 m.

13. Procédé d'utilisation du cadre de charge selon l'une quelconque des revendications 1 à 10 afin de tester une éprouvette (2), **caractérisé en ce qu'**une section de l'éprouvette (2) est insérée dans l'évidement (15) du cadre de charge et est collée à la tôle (10).

14. Procédé selon la revendication 13, dans lequel un espace faisant le tour de l'éprouvette (2), d'une largeur comprise entre 0,2 mm et 5 mm et permettant l'introduction d'un adhésif (3) est fourni entre la tôle (10) agencée dans l'évidement (15) et l'éprouvette (2) insérée.

15. Procédé selon la revendication 13 ou 14, dans lequel une première région d'extrémité de l'éprouvette (2) est insérée dans le cadre de charge et est collée, et une seconde région d'extrémité opposée à la première région d'extrémité est insérée dans un second cadre de charge et est collée au second cadre de charge, et les deux cadres de charge sont déplacés l'un par rapport à l'autre afin d'introduire une contrainte de traction et/ou de compression dans l'éprouvette (2).
